# EUROPÄISCHE PATENTSCHRIFT

(11) **EP 0 710 192 B1**
(45) Veröffentlichungstag und Bekanntmachung des Hinweises auf die Patenterteilung: **30.09.1998**
(21) Anmeldenummer: 94924262.2
(22) Anmeldetag: 19.07.1994
(51) Int. Cl.: B60K 41/22, F16D 48/02

(54) **REGELVERFAHREN FÜR EIN STUFENLOSES UMSCHLINGUNGSGETRIEBE**
CONTINUOUSLY VARIABLE TRANSMISSION REGULATION PROCESS
PROCEDE DE REGULATION D'UNE TRANSMISSION A VARIATION CONTINUE

(30) Priorität: 23.07.1993 DE 4324810
(43) Veröffentlichungstag der Anmeldung: 08.05.1996
(73) Patentinhaber: ZF FRIEDRICHSHAFEN Aktiengesellschaft, 88038 Friedrichshafen (DE)
(72) Erfinder: SCHWAB, Manfred, D-88069 Tettnang (DE)
(86) Internationale Anmeldenummer: EP9402372
(87) Internationale Veröffentlichungsnummer: WO9503191

(56) Entgegenhaltungen:
- DE-A- 3 914 792
- US-A- 4 829 221
- US-A- 4 958 538
- US-A- 5 006 092

## Beschreibung

Die Erfindung betrifft ein Regelverfahren für ein stufenloses Umschlingungsgetriebe nach dem Oberbegriff des ersten Anspruchs.

Stufenlose Umschlingungsgetriebe haben auf der An- und Abtriebswelle jeweils ein Kegelscheibenpaar. Zwischen diesem Kegelscheibenpaar läuft ein Riemen, Kette oder Gliederband, welches die An- und Abtriebswelle umschlingt. Jedes Kegelscheibenpaar besteht aus einer mit einer Welle fest verbundenen ersten Kegelscheibe und einer zweiten, in axialer Richtung verschiebbaren, Kegelscheibe. Die Antriebskraft wird durch Reibungsschluß zwischen dem Zugorgan und den Kegelscheiben übertragen. Über eine hydraulische Betätigungseinrichtung wird die axiale Lage der zweiten Scheibe verändert. Dadurch ändert sich der wirksame Durchmesser des Zugorgans und somit die Getriebeübersetzung.

Aus der US-A 4,958,538 ist ein stufenloses Umschlingungsgetriebe mit einer zwischen der Abtriebswelle und der Ausgangsseite des Umschlingungsgetriebes angeordneten Rutschkupplung bekannt. Über zwei Sensoren wird mittels eines Drehzahlvergleichs der Punkt ermittelt, bei dem die Kupplung zu rutschen beginnt. Dieser Rutschzustandswert wird sodann in der Getriebesteuerung für die Drucksteuerung der Kegelscheibenpaare weiter verwendet. Das Kupplungsmoment selbst wird nicht gemessen, so daß das tatsächliche Verhalten der Kupplung nicht bekannt ist.

Die Erfindung hat die Aufgabe, die Kupplung in Abhängigkeit ihres aktuellen Zustandes zu beeinflussen.

Die Aufgabe wird erfindungsgemäß dadurch gelöst, daß während des Betriebes das aktuelle Rutschmoment der Kupplung zyklisch oder antizyklisch ermittelt wird. Hierzu wird das Druckniveau der Kupplung von einem ersten Niveau auf ein zweites Niveau abgesenkt. Das zweite Niveau ist dann erreicht, wenn sich an der Kupplung eine vorgebbare Drehzahldifferenz einstellt, die mittels zweier Drehzahlsensoren gemessen wird. Die Höhe der Druckniveaudifferenz, also erstes Niveau minus zweites Niveau, wird sodann mit einer Kennlinie verglichen. Über diesen Vergleich ergibt sich ein Korrekturwert. Über diesen Korrekturwert wird die Kennlinie danach adaptiert. Gemäß Anspruch 2 entspricht hierbei die Eingangsvariable der Kennlinie dem Moment an der Kupplung und die abhängige Variable der Kennlinie dem Kupplungsdruck.

Die Ermittlung des Rutschmomentes der Kupplung erfolgt mit einem festen Zeittakt oder bei vorgegebenen Betriebsbedingungen. Vorgegebene Betriebsbedingungen können z. B. Laststellung, Motordrehzahlwerte oder Kombinationen von diesen Betriebsgrößen sein.

Die erfindungsgemäße Lösung bietet den Vorteil, daß Einflußgrößen auf das Übertragungsverhalten der Kupplung erfaßt werden. Einflußgrößen der Kupplung sind z. B. Streuung des Reibwertes durch Fertigungstoleranzen, Veränderung des Reibwertes als Funktion der Temperatur, Veränderung des Reibwertes während der Lebensdauer des Getriebes und das Losreißmoment einer haftenden Kupplung.

In Ausgestaltung der Erfindung wird vorgeschlagen, daß der Korrekturwert bei jeder Ermittlung des Rutschmomentes aktualisiert wird. Hierdurch werden sich rasch verändernde Einflußgrößen, z. B. Temperatur, erfaßt.

In einer weiteren Ausgestaltung der Erfindung wird vorgeschlagen, daß, wenn bei einer vorgegebenen Anzahl von Korrekturwerten, der Korrekturwert einen ersten positiven Druckgrenzwert überschreitet oder einen zweiten negativen Druckgrenzwert unterschreitet, der letzte Korrekturwert in einem nicht flüchtigen Speicher abgelegt wird.
Hierdurch wird der Vorteil erreicht, daß sich langsam ändernde Einflußgrößen, z. B. Reibwertänderung während der Lebensdauer oder Serienstreuung, berücksichtigt werden. Durch Speicherung des letzten Korrekturwertes in einem z. B. batteriegepufferten RAM wird erreicht, daß nach Neustart des Fahrzeugs der letzte Korrekturwert unmittelbar in die Berechnung des Kupplungsdruckes mit eingeht.

Weiters wird vorgeschlagen, daß aus einer vorbestimmten Anzahl von Korrekturwerten ein repräsentativer Korrekturwert bestimmt und dieser in einem nicht flüchtigen Speicher abgelegt wird. Ein repräsentativer Korrekturwert kann z. B. über Mittelwertbildung oder mathematische Filteralgorithmen bestimmt werden. Hierdurch wird der Vorteil erzielt, daß die Dauerhaftigkeit der Abweichungen und die Plausibilität der Korrekturwerte geprüft wird.

In der Zeichnung ist ein Ausführungsbeispiel dargestellt.
Es zeigen:
- Fig. 1: ein Systemschaubild eines stufenlosen Umschlingungsgetriebes;
- Fig. 2: Kupplungsdruck-Zeit- und Kupplungsschlupf-Zeit-Diagramm.

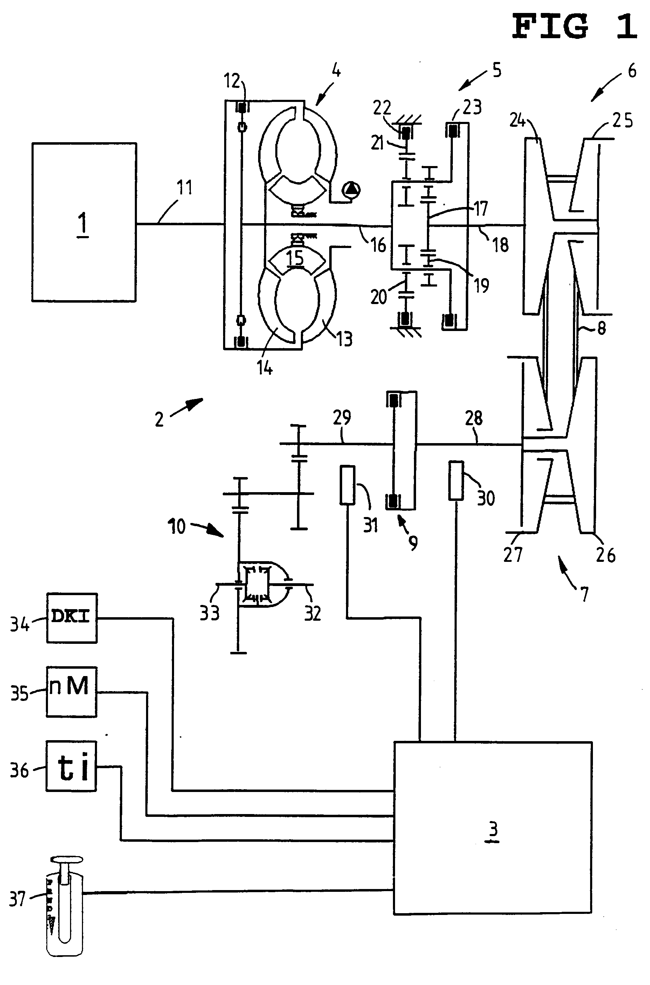

Fig. 1 zeigt ein Systemschaubild eines stufenlosen Umschlingungsgetriebes. Dieses System besteht aus einer Antriebseinheit 1, einem stufenlosen Umschlingungsgetriebe 2 und einer elektronischen Getriebesteuerung 3. Das stufenlose Umschlingungsgetriebe 2 wiederum besteht aus den Baugruppen hydrodynamischer Wandler 4, Planetenwendegetriebe 5, zwei Kegelscheibenpaaren 6 und 7 mit Zugorgan 8, einer Kupplung 9 und einer Reduzierstufe mit Differential 10.

Das stufenlose Umschlingungsgetriebe 2 wird über eine Welle 11 von einer Antriebseinheit 1, z. B. Brennkraftmaschine, angetrieben. Mit der Welle 11 verbunden ist ein hydrodynamischer Wandler 4 mit einer Überbrückungskupplung 12. Der hydrodynamische Wandler 4 besteht bekanntermaßen aus einem Pumpenrad 13, einem Turbinenrad 14 und einem Leitrad mit mechanischem Freilauf 15. Der hydrodynamische Wandler 4 dient der Anfahrwandlung des abgegebenen Momentes der Antriebseinheit 1. Die Überbrückungskupplung 12 überbrückt den hydrodynamischen Wandler 4 im Kupplungspunkt, d. h. dem Punkt, an dem das Pumpen- und Turbinen-Moment gleich groß sind. Die Überbrückungskupplung 12 und der hydrodynamische Wandler 4 treiben den Planetensteg 16 an. Der Planetensteg 16 ist ein Bestandteil des Planetenwendegetriebes 5.
Das Planetenwendegetriebe 5 setzt sich zusammen aus: Sonnenrad 17 mit Sonnenradwelle 18, einem ersten Planetenrad 19, einem zweiten Planetenrad 20, einem Hohlrad 21, dem Planetensteg 16, Bremse 22 und Kupplung 23. Das Planetenwendegetriebe 5 wird über den Planetensteg 16 angetrieben. Auf dem Planetensteg 16 sind die Planetenräder 19 und 20 drehbar gelagert. Im Vorwärtsfahrbereich ist die Kupplung 23 geschlossen und die Bremse 21 geöffnet. Der Kraftfluß ist somit Planetensteg 16, Kupplung 23 auf Sonnenradwelle 18.
Im Rückwärtsfahrbereich ist die Kupplung 23 geöffnet und die Bremse 22 geschlossen. Das Hohlrad 21 ist somit drehfest mit dem Getriebegehäuse verbunden. Der Kraftfluß ist jetzt Planetensteg 16, Planetenrad 19, Sonnenrad 17 mit Drehrichtungsumkehr.
Die Sonnenradwelle 18 treibt das erste Kegelscheibenpaar 6 an. Dieses ist über ein Zugorgan 8 mit einem zweiten Kegelscheibenpaar 7 verbunden. Jedes Kegelscheibenpaar besteht aus einer in axialer Richtung feststehenden ersten Kegelscheibe 24 und 26 und einer in axialer Richtung verschiebbaren zweiten Kegelscheibe 25 und 27. Die Kraft wird durch Reibungsschluß zwischen Kegelscheibe und Zugorgan übertragen. Eine Veränderung der axialen Position der zweiten Kegelscheibe 25 oder 27 bewirkt eine Veränderung des Laufradius des Zugorgans und somit eine Änderung des Übersetzungsverhältnisses.
Eine Kupplung 9 ist über die Welle 28 mit dem zweiten Kegelscheibenpaar 7 verbunden. Zwei Drehzahlsensoren 30 und 31 erfassen die Drehzahl der Welle 28 und der Welle 29. Die Kupplung 9 ist eine Überlastsicherung. Zum einen überträgt die Kupplung schlupffrei das Moment der Welle 28 auf die Welle 29 und weiter auf die Reduzierstufe mit Differential 10 und den beiden Abtriebswellen 32 und 33. Zum anderen ist das Druckniveau in der Kupplung so gewählt, daß bei abtriebsseitig eingeleiteten Drehmomentspitzen die Kupplung zu schlupfen beginnt. Dadurch wird die Kraftübertragung der Kegelscheibe auf das Zugorgan von Drehmomentspitzen freigehalten.
Eine elektronische Getriebesteuerung 3 steuert über ein nicht dargestelltes hydraulisches Steuergerät das stufenlose Umschlingungsgetriebe 2. Eingangssignal der elektronischen Getriebesteuerung 3 sind ein Drosselklappensignal 34, eine Motordrehzahl 35, eine Einspritzzeit 36, ein Signal eines Fahrpositionsschalters 37, ein Signal des Drehzahlfühlers 30 und ein Signal des Drehzahlfühlers 31. Die Berechnung des von der Antriebseinheit 1 abgegebenen Momentes erfolgt in der elektronischen Getriebesteuerung 3 bekanntermaßen aus den beiden Eingangssignalen Motordrehzahl 35 und Einspritzzeit 36. Anstelle der Einspritzzeit 36 kann auch ein Signal von einer nicht dargestellten elektronischen Motorsteuerung verwendet werden, welches das Moment der Antriebseinheit 1 repräsentiert.

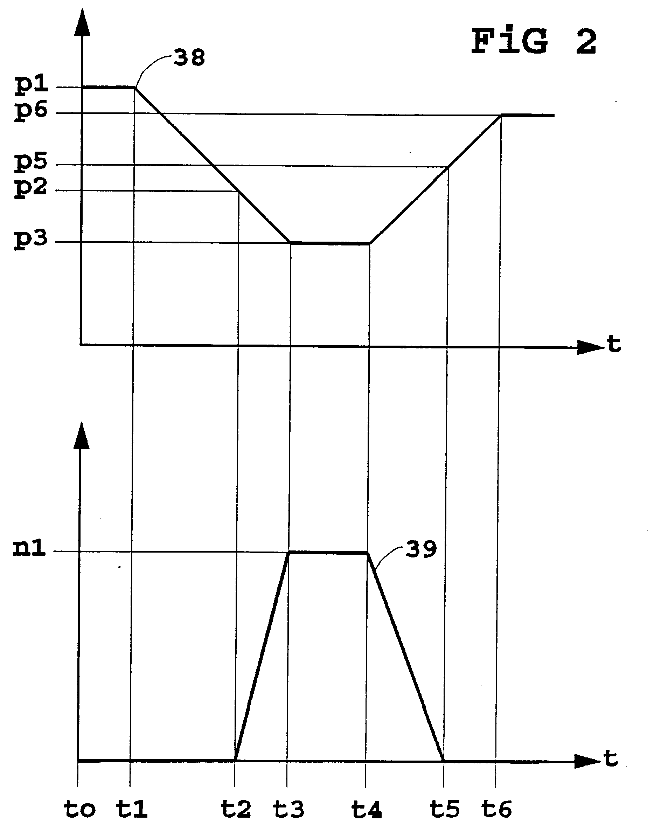

Fig. 2 zeigt ein Kupplungsdruck-Zeit-Diagramm 38 und ein Kupplungsschlupf-Zeit-Diagramm 39 der Kupplung 9. Zum Zeitpunkt t0 ist die Kupplung 9 mit dem Druck p1 beaufschlagt. Das erste Druckniveau p1 ergibt sich aus einer Kennlinie. Über diese Kennlinie wird einem berechneten Kupplungsmoment ein Druckwert zugeordnet. Dieser Druckwert kann geringfügig erhöht sein, z. B. 0,2 bar als Sicherheitszuschlag. Das Kupplungsmoment berechnet sich aus dem Moment der Antriebseinheit 1, Wandlerverstärkung, Übersetzungsverhältnis des Planetenwendegetriebes 5 und dem Übersetzungsverhältnis der beiden Kegelscheibenpaare. Im Zeitpunkt t1 wird der Druck an der Kupplung 9 linear abgesenkt. Beim Druckniveau p2, zum Zeitpunkt t2, beginnt die Kupplung 9 zu schlupfen. Der Kupplungsschlupf wird in der elektronischen Getriebesteuerung 3 aus den Drehzahlwerten der beiden Drehzahlsensoren 30 und 31 errechnet. Der Druck an der Kupplung 9 wird bis auf das Druckniveau p3 abgesenkt. Das Druckniveau p3 ist dann erreicht, wenn eine vorgegebene Drehzahldifferenz n1 an der Kupplung 9 auftritt, z. B. 50 Umdrehungen. Im Zeitraum t3 bis t4 wird das Druckniveau p3 beibehalten. Bei t4 wird der Druck an der Kupplung 9 linear erhöht. Durch die Druckerhöhung verringert sich der Schlupf an der Kupplung 9. Die Drehzahldifferenz an der Kupplung 9 ist Null mit Erreichen des Druckniveaus p5. Der Druckwert p2 und p5 sind unterschiedlich. Ursache hierfür ist das Übergangsverhalten der Kupplung 9 beim Übergang von geschlossen nach geöffnet und geöffnet nach geschlossen. Zum Zeitpunkt t6 ist die Kupplung 9 mit dem Druckwert p6 beaufschlagt. Das Druckniveau p6 ergibt sich aus der korrigierten Kennlinie und einem Sicherheitszuschlag.

### Bezugszeichen

- 1: Antriebseinheit
- 2: stufenloses Umschlingungsgetriebe
- 3: elektronische Getriebesteuerung
- 4: hydrodynamischer Wandler
- 5: Planetenwendegetriebe
- 6: erstes Kegelscheibenpaar
- 7: zweites Kegelscheibenpaar
- 8: Zugorgan
- 9: Kupplung
- 10: Reduzierstufe mit Differential
- 11: Welle
- 12: Überbrückungskupplung
- 13: Pumpenrad
- 14: Turbinenrad
- 15: Leitrad mit Freilauf
- 16: Planetensteg
- 17: Sonnenrad
- 18: Sonnenradwelle
- 19: erstes Planetenrad
- 20: zweites Planetenrad
- 21: Hohlrad
- 22: Bremse
- 23: Kupplung
- 24: erste Kegelscheibe, feststehend
- 25: zweite Kegelscheibe, verschiebbar
- 26: erste Kegelscheibe, feststehend
- 27: zweite Kegelscheibe, verschiebbar
- 28: Welle
- 29: Welle
- 30: Drehzahlsensor
- 31: Drehzahlsensor
- 32: Getriebeausgangswelle
- 33: Getriebeausgangswelle
- 34: Drosselklappensignal
- 35: Motordrehzahl
- 36: Einspritzzeit
- 37: Fahrpositionsschalter
- 38: Kupplungsdruck-Zeit-Diagramm
- 39: Kupplungsschlupf-Zeit-Diagramm

## Patentansprüche

1. Regelverfahren für ein stufenlos arbeitendes Umschlingungsgetriebe (2), welches ein erstes auf einer Antriebswelle und ein zweites auf einer Abtriebswelle angeordnetes Kegelscheibenpaar (6 und 7) sowie eine Rutschkupplung (9) aufweist, welche zwischen dem zweiten Kegelscheibenpaar (7) und der Ausgangsseite des Umschlingungsgetriebes angeordnet ist, dadurch **gekennzeichnet,**
- daß während des Betriebes das aktuelle Rutschmoment der Kupplung (9) zyklisch oder antizyklisch ermittelt wird, indem das Druckniveau der Kupplung von einem ersten Niveau (p1) auf ein zweites Niveau (p3) abgesenkt wird, welches dann erreicht ist, wenn sich an der Kupplung eine vorgebbare Drehzahldifferenz einstellt, die mittels zweier Drehzahlsensoren gemessen wird, und
- daß die Höhe der Druckniveaudifferenz (p1 minus p3) mit einer Kennlinie verglichen wird, um einen Korrekturwert festzulegen, über den die Kennlinie adaptiert wird.

2. Regelverfahren nach Anspruch 1, dadurch **gekennzeichnet,** daß die Kennlinie gebildet wird aus der Abhängigkeit Kupplungsdruck vom Moment an der Kupplung (9).

3. Regelverfahren nach Anspruch 1, dadurch **gekennzeichnet,** daß der Korrekturwert bei jeder Ermittlung des Rutschmomentes aktualisiert wird.

4. Regelverfahren nach Anspruch 1, dadurch **gekennzeichnet,** daß, wenn bei einer vorgegebenen Anzahl von Korrekturwerten der Korrekturwert einen ersten positiven Druckgrenzwert überschreitet oder einen zweiten negativen Druckgrenzwert unterschreitet, der letzte Korrekturwert in einem nicht flüchtigen Speicher abgelegt wird.

5. Regelverfahren nach den Ansprüchen 1, 3 oder 4, dadurch **gekennzeichnet,** daß aus einer vorbestimmten Anzahl von Korrekturwerten ein repräsentativer Korrekturwert bestimmt und dieser in einem nicht flüchtigen Speicher abgelegt wird.

## Claims

1. Control method for an infinitely variable transmission (2), which comprises a first conical disc pair (6) disposed on a drive shaft and a second conical disc pair (7) disposed on an output shaft as well as a slipping clutch (9) disposed between the second conical disc pair (7) and the output side of the transmission, characterized in
- that during operation the actual slip torque of the clutch (9) is determined cyclicaliy or anticyclically by lowering the pressure level of the clutch from a first level (p1) to a second level (p3), which is reached when there arises at the clutch a preselectable speed difference which is measured by means of two speed sensors, and
- that the amount of the pressure level difference (p1 minus p3) is compared with a characteristic curve in order to define a correction value, by means of which the characteristic curve is adapted.

2. Control method according to claim 1, characterized in that the characteristic curve is formed from the dependence of the clutch pressure upon the torque at the clutch (9).

3. Control method according to claim 1, characterized in that the correction value is updated each time the slip torque is determined.

4. Control method according to claim 1, characterized in that when, given a presec number of correction values, the correction value exceeds a first positive pressure limit value or falls below a second negative pressure limit value, the last correction value is filed in a nonvolatile memory.

5. Control method according to claims 1, 3 or 4, characterized in that from a predetermined number of correction values a representative correction value is determined and filed in a non-volatile memory.

## Revendications

1. Méthode de réglage pour une transmission variable en continu (2) comportant une première paire de disques coniques montée sur un arbre menant et une deuxième paire de disques coniques montée un arbre mené (6 et 7), ainsi qu'un accouplement à friction (9) monté entre la deuxième paire de disques coniques (7) et le côté sortie de la transmission, **caractérisée** en ce que
- durant le fonctionnement, le moment de friction effectif de l'accouplement (9) est déterminé de façon cyclique ou anti-cyclique du fait que le niveau de pression de l'accouplement est baissé d'un premier niveau (p1) à un deuxième niveau (p3), lequel est atteint lorsque, sur l'accouplement, se présente une différence de la vitesse de rotation prédéfinissable qui est mesurée au moyen de deux détecteurs de la vitesse de rotation, et
- en ce que la grandeur de la différence de pression (p1 moins p3) est comparée à une courbe caractéristique pour déterminer une valeur de correction au moyen de laquelle la courbe caractéristique est adaptée.

2. Méthode de réglage selon la revendication 1, **caractérisée** en ce que la courbe caractéristique est formée à partir de la dépendance de la pression de l'accouplement du moment de l'accouplement (9).

3. Méthode de réglage selon la revendication 1, **caractérisée** en ce que la valeur de correction est actualisée lors de chaque détermination du moment de friction.

4. Méthode de réglage selon la revendication 1, **caractérisée** en ce que, si pour un nombre de valeurs de correction prédéfini, la valeur de correction dépasse une première valeur limite positive de pression ou reste en dessous d'une deuxième valeur limite négative de pression, la dernière valeur de correction est sauvegardée dans une mémoire non volatile.

5. Méthode de réglage selon les revendications 1, 3 ou 4, caractérisée en ce qu'à partir d'un nombre prédéfini de valeurs de correction, une valeur de correction représentative est déterminée, laquelle est sauvegardée dans une mémoire non volatile.
